Europäisches Patentamt

European Patent Office

Office européen des brevets

(19)

(11) Publication number : **0 028 862**
**B2**

(12) # NEW EUROPEAN PATENT SPECIFICATION

(45) Date of publication of the new patent specification :
02.11.89

(21) Application number : 80201052.0

(22) Date of filing : 05.11.80

(51) Int. Cl.⁴ : **B 29 C 39/10**, B 29 C 53/02,
B 29 L 31/44

(54) Method and apparatus for forming a plate with at least one profiled border.

(30) Priority : 07.11.79 NL 7908139

(43) Date of publication of application :
20.05.81 Bulletin 81/20

(45) Publication of the grant of the patent :
29.08.84 Bulletin 84/35

(45) Mention of the opposition decision :
02.11.89 Bulletin 89/44

(84) Designated contracting states :
AT BE CH DE FR GB IT LI LU NL SE

(56) References cited :
CH--A-- 468 535
DE--A-- 2 044 416
DE--A-- 2 117 070
DE--A-- 2 129 828
DE--A-- 2 516 457
DE--B-- 2 047 213
DE--U-- 7 204 659
DE--U-- 7 243 557
FR--A-- 2 349 441
US--A-- 2 500 895
US--A-- 3 392 074
US--A-- 3 393 107
US--A-- 3 759 644
US--A-- 4 113 901
Lueger: "Lexikon der Technik", Band 13, "Lexikon
der Feinwerktechnik", DVA Stuttgart 1968, p. 29
Lueger: "Lexikon der Technik", Band 15, Lexikon der
Fabrikorganisation und Fördertechnik", DVA Stutt-
gart 1971, p. 217-218 "Kratzerförderer"

(73) Proprietor : VAN ERVEN, Waltherus Joseph Maria
6a, Grote Voort
NL-5081 HE Hilvarenbeek (NL)

(72) Inventor : VAN ERVEN, Waltherus Joseph Maria
6a, Grote Voort
NL-5081 HE Hilvarenbeek (NL)

(74) Representative : Hoijtink, Reinoud et al
OCTROOIBUREAU ARNOLD & SIEDSMA Sweelinck-
plein 1
NL-2517 GK Den Haag (NL)

EP 0 028 862 B2

**Description**

The invention relates to a method of forming a composite plate as described in the preamble of claim 1.

Such a method is known from US-A-3 392 074. In this method, which is of particular importance in the field of constructing kitchen drainboards, the cover sheets are made of rather stiff plate like structure. The material is constructed by thermo-hardening synthetic resin of postformable type. The curing process thereof is not yet completed and by heating the cover sheet it can still once be plastically deformed. The peripheral parts of such cover sheets are bent into their final profiled shape with the aid of special bending apparatus, whereby bending moments are applied onto the peripheral parts of the cover sheets, while they are supported by means of profiled bending supports. After the bending operation, a filling piece having the profile of the profiled edge is arranged at the edge of the base sheet, after which the cover sheet is glued to the filling piece under pressure. A disadvantage of this method is that due to the curved face of the profiled edge it is particularly difficult to ensure that during glueing the pressure should be everywhere sufficiently high. If the pressure is not sufficiently high, the glue connection becomes locally defective and hence the cover sheet will not satisfactorily join the filling piece. Where the junction is not satisfactory, the cover sheet may readily crack when struck. Moreover, the insufficiently joined parts may form bubbles in the course of time and under the influence of heat. A further disadvantage resides in that the insert is expensive because it has to be of hard wood in order to ensure adequate resistance to strokes on the profiled edge, and it has to be milled into the desired profile.

The invention has for its object to produce such a composite plate in a simpler manner and so that the occurrence of non-joining parts of the cover sheet is avoided. This is achieved with the method according to present invention, which is characterized as described in the characterizing clause of claim 1. Although the nestling of a rather stiff sheet against a curved mould surface is required with this invented method, experiences have shown that this nestling operation of step c) is quite simple. The shaping process of the cover sheet can easier be carried out by pressure force directed substantially perpendicular to the plane of the free edge than with the known bending process.

Because the filling agent is introduced into the space in the liquid state, it comes into contact with the entire surface of the cover plate bounding said space so that subsequent to curing of the filling agent there are no non-joining parts. Since the cumbersome arrangement of the filling piece on the base sheet is avoided, the method according to the invention is materially simpler. For this reason and because no expensive, profiled hardwood insert is required, the ready composite plate is appreciably cheaper.

In a preferred method the cover sheet is not connected with the base sheet over an area next to the edge of the base sheet. In this way the cover sheet can also be deformed in the not-connected part, so that the not-connected part of the base sheet extends into the profiled edge part. In this way filling agent can advantageously be saved.

When, according to the invention in employing this last mentioned preferred method, a groove is recessed in the area of the base sheet not to be connected with the cover sheet, before the cover sheet is connected with the base sheet, the boarder between the connected and the not-connected part is defined by this groove. This boarder therefore can be a straight line, so that, when the profiled edge has a bend directly from said boarder, this bend will also extend along a straight line.

The method is advantageously employed for manufacturing a composite plate, in which the base sheet is plywood or wood fibre sheet.

The method according to the invention is particularly suitable for manufacturing a kitchen drain board with a water-arresting rim.

To attain a swift production and a good filling of the space, the curable filling agent is preferably pressure fed into the space between the cover sheet and the base sheet.

The invention furthermore relates to and provides a device as claimed in anyone of the claims 7 to 10, the pre-characterizing features of claim 7 being known from US-A-3 392 074.

It is particularly advantageous to have the mould movable with respect to the base sheet retained on the table so that during the process the base sheet with the cover sheet need not be shifted in place for nestling the peripheral part in the mould. Thus the risk of damage of the cover sheet during the manufacturing process is drastically reduced.

From US-A-3 393 107 a method for forming a composite plate is known, in which a cover sheet is connected with a base sheet in such a way that a peripheral part of the cover sheet protrudes beyond the edge of the base sheet. Furthermore a space bounded by the peripheral part of the cover sheet and the edge of the base sheet is filled with a curable filling agent. However, the protruding peripheral part of the cover sheet is not deformed and the profiled edge is formed by an outer surface of the cured filling agent.

From DE-U-7 243 557 a method of forming a composite plate from a base sheet, a cover sheet and curable filling agent is known, wherein a peripheral part of the cover sheet is deformed out of its plane according to the profile of a profiled edge to be made and wherein a space bounded by this peripheral part of the cover sheet and an edge of the base sheet is filled out, whereafter the filling agent is cured. In this prior art method, however, the cover sheet is not, in a previous manufactured step, partly connected with the base sheet in a manner such that a peripheral part of the cover sheet protrudes beyond the edge of the base sheet in the proximity of which edge the profiled edge has to be made. Instead of this previous manufacture step — which is essential for the method of present invention — the cover sheet and base sheet are interconnected simultaneously when the space between the peripheral edge of the cover sheet and the base sheet edge is filled with curable filling agent. This prior art requires :

— a mould with large cavity for receiving the whole composite plate ;

— distance means between cover sheet and base sheet as well as an operation step of positioning such distance pieces ; or the additional manufacturing step of machining grooves into the surface of the base sheet ; and

— much expensive curable filling agent for filling the space between cover sheet and the great surface of the base sheet and for filling the space of the mould at the back side surface of the base sheet.

DE-B-2 047 213 discloses a method of manufacturing a composite plate having a profiled edge comprising a base sheet and a cover sheet, e. g. constituted of synthetic resin. First said cover sheet is connected over its full length with the base sheet. Subsequently a cavity is machined in the base plate so that a thin layer of the base plate supports an edge of the cover sheet so that a composite protruding edge is made which is flexible to such extend that it can be bent out of its plane in order to deform it in accordance with the profiled edge to be made. The machining step after connection of the cover sheet should be carried out very carefully and the bending radius of the composite protruding edge can not be small. This means that this method is not well applicable for composite plates having profiled edges with small radius, e. g. kitchen draining boards.

DE-U-7 204 659 discloses a method of forming a composite plate having a base sheet and a cover sheet with a profiled edge. Also in this prior art method the cover sheet is connected over its whole length with the base sheet and over the region where a profiled edge has to be made, the base sheet is machined away preferably substantially up to the cover sheet. When the cover sheet is constituted by veneer, it is steamheated and deformed into the prescribed shape of the profiled edge, whereafter a space bounded by the edge of the base sheet and the cover sheet is filled out with a curable agent. This prior art discloses the use of a cover sheet of synthetic resin, although it does not mention the post-formable type. This prior art does not disclose a nestling step of applying a pushing pressure on the free edge of the peripheral part of the cover sheet substantially perpendicular to the plane of the free edge.

US-A-2 500 895 discloses a method of producing a composite plate having a profiled edge and having a base sheet and a cover sheet constituted of woven fabric or felt. The base sheet is made of a fiber bat impregnated with a curable agent. This composite plate is made by covering the flexible fiber bat with the cover sheet, cutting this assembly to size and pressing the sized assembly into a mould cavity by pressing an edge part of the base sheet material together with its cover sheet part into a profiled edge cavity by means of a mould element which deforms the base sheet material up to such extend that its outer surface, which is constituted by the cover sheet, nestles against a mould surface. The material of the base sheet and of the cover sheet together with the curable agent impregnated therein is then cured by heat of the mould. This prior art method does not deal with forming an edge to a combination of a rigid base sheet and a sheet of synthetic resin of the post-formable type, which in normal state is quite stiff but which can be made deformable for a short period of several seconds. Further this prior art does not deal with injection of curable agent in a space created between a positioned protruding edge of a cover sheet and a rigid base sheet.

DE-A-2 516 457 discloses a method of producing a composite plate having a first step of making a base sheet with edges of synthetic resin. In a succeeding step this composite plate with rounded edges is laminated with a flexible cover sheet by wrapping the cover sheet around the already profiled, rounded edges.

The above mentioned and further particularities of the invention will be explained in the following description with reference to the drawings.

The drawings show in

Figures 1a, 1b, 1c schematically three phases in the production of a composite plate by carrying out the method in accordance with the invention.

Figure 2 a sectional view of a composite plate having two different profiled edges manufactured by carrying out the method in accordance with the invention.

Figure 3 on an enlarged scale a detail III of figure 2.

Figure 4 a sectional view like figure 3 of a different embodiment of a profiled edge.

Figure 5 a sectional view of a different profiled edge.

Figure 6 a perspective view partly broken away and partly sectioned of a device in accordance with the invention for manufacturing a profiled edge according to detail VI in figure 2 and

Figure 7 a sectional view of a different embodiment of a device in accordance with the invention.

Figure 8 an enlarged schematic sectional view corresponding to figure 7 of a device using a different method according to the invention.

Figure 9 a sectional view corresponding to figure 8 showing a different embodiment of a profiled edge.

Figure 10 a sectional view corresponding to figures 8 and 9, showing another different embodiment of a profiled edge.

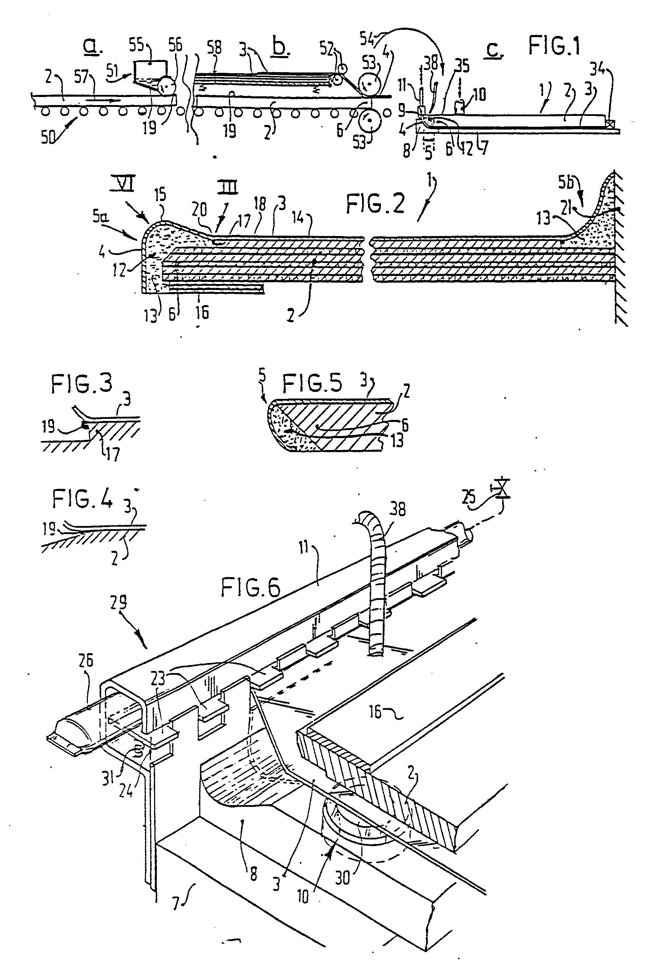

Figures 1a, 1b, 1c illustrate the manufacture of a composite plate 1 in accordance with the invention. A conveyor device 50 supplies a base sheet 2. The base sheet 2 may be of wood, metal or synthetic resin. The glueing device 51 arranged above the conveyor device 50 supplies glue 19 from a reservoir 55 applied by a roller 56 to the base sheet 2, whilst this base sheet 2 is moved in the direction indicated by the arrow 57. In a further phase (fig. 1b) a cover sheet 3 supplied from a stock holder 58 arranged above the conveyor device 50 is applied to the base sheet 2 provided with glue 19. The cover sheet 3 is taken out of the holder 58 by relatively cooperating transport rollers 52, which carry the cover sheet 3 towards the roller press 53, by which the cover sheet 3 is forcibly pressed onto the base sheet 2.

The cover sheet 3 is applied in a manner such that a peripheral part thereof protrudes beyond the edge of the base sheet 2. Subsequently the base sheet 2 with the cover sheet 3 partly bonded thereto is inverted (indicated symbolically by the arrow 54) and positioned on a table 7 against a stop 34 arranged at a given distance from a mould 8. The mould 8 has a profile corresponding with the desired profile of the profiled edge 5. The base sheet 2 is then clamped tight to the table 7 by means of holding members 10, which are movable towards the table 7 and can be fixed in a desired position relative to the table 7. In order to ensure that the outer surface of the peripheral part 4 is everywhere in satisfactory contact with the mould 8, positioning means 11 movable with respect to the mould 8 are arranged for pressing the peripheral part 4 in the mould 8. The space 12 bounded by the peripheral part 4 of the cover sheet 3 and the edge 6 of the base sheet 2 is then filled with a curable filling agent 13 adhering to the two sheets. The filling agent 13 is supplied from a nozzle 38 of a filling agent supply device (not shown). When the space 12 is completely filled up with the filling agent, the supply is stopped and the filling agent is allowed to cure. Subsequently the ready composite plate 1 can be removed out ot the mould 8 and from the table 7 after the positioning means 11 and the holding means 10 have been moved into a rest position at a distance from the composite slab 1. Any redundant filling agent protruding out of the surface 35 of the base sheet 2 is subsequently ground away.

Figure 2 shows a composite plate 1 manufactured by the method according to the invention, which is intended for use as a kitchen drain board. This composite plate 1 has two profiled edges 5a and 5b. The profiled edge 5a on the lefthand side of figure 2 protrudes upwards from the top surface 14 of the composite plate 1. In this way a water-arresting rim 15 is formed to prevent water from flowing away from the composite plate 1 during use. In this case the base sheet 2 is made from plywood or compressed wood fibre. The cover plate 3 is a sheet of thermo-hardening synthetic resin of a post-formable type. A property of this type is that the synthetic resin has not yet completely cured chemically, so that it can still once be rendered plastically deformable by heating it. Consequently, before the peripheral part 4 of the cover sheet 3 is nestled against the mould 8, it is heated.

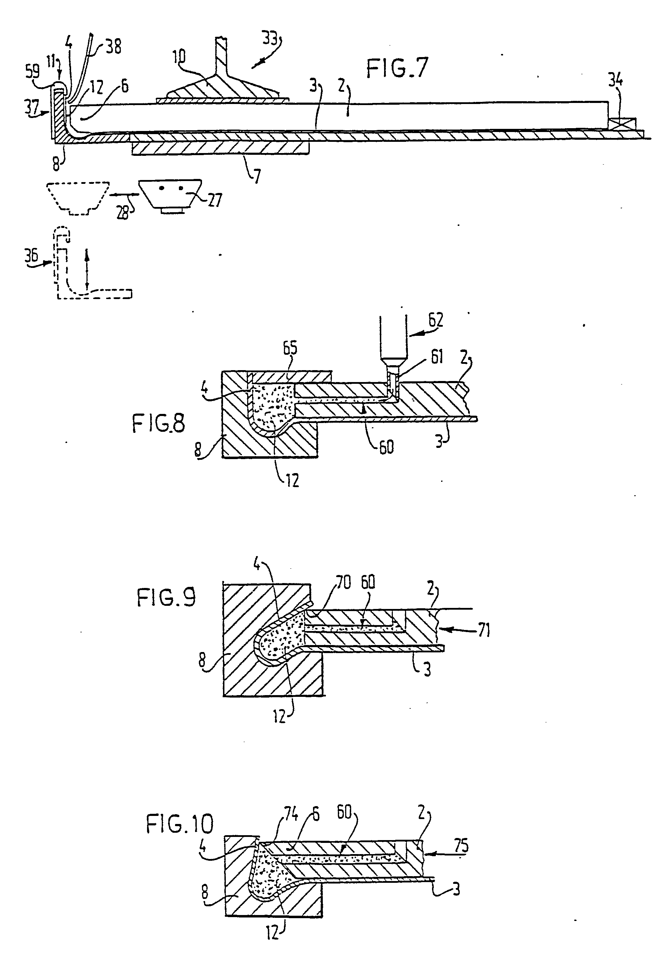

Figure 2 shows that a stand piece 16 is arranged on the base sheet 2 in order to obtain the desired height of the profiled edga 5a. At the area of the profiled edge 5a the shape of the edge 6 of the base sheet 2 is roughly adapted to the profile of the profiled edge 5a. As a result a smaller amount of filling agent 13 is required for filling out the space 12 between the peripheral part 4 of the cover sheet 3 and the edge 6 of the base sheet 2. In this embodiment the surface of the edge 6 merges through an interface 17 transverse of the connecting surface 18 of the base sheet 2 with the cover sheet 3 in said surface. This has the advantage that the glue 19, which is forced from between the base sheet 2 and the cover sheet 3 when the latter are joined, does not interconnect the sheets 3 and 2 more than is desired (see figure 3). Any further connection is, however, possible when the surface of the rim 6 joins the connecting surface 18 without a transverse interface 17 between the base sheet 2 and the cover plate 3, as is indicated in figure 4. If in the latter case at different places different amounts of glue 19 are pinched from between the sheets 2 and 3, as will occur in practice, the bend 20 of the cover sheet 3 will not form a straight line in the longitudinal direction of the composite plate 1 where it terminates in the water-arresting rim 15. This is avoided by the arrangement of the transverse interface 17.

A material particularly suitable for use as a filling agent is polyurethane resin. This material cures very rapidly owing to the chemical reaction between two components which are mixed directly prior to filling the space with material.

Figure 5 shows a profiled edge 5, where the cover sheet 3 is bent back towards the edge 6 of the base sheet 2. Thus the profiled edge 5 has a finished appearance also in an inclined view from below.

Figure 6 shows a device 29 for carrying out the method according to the invention. This device 29 is constructed for making a water-arresting rim as shown in figure 1c. Corresponding parts are designated by the same reference numerals and have the same function as in figure 1c. In this case the holding means 10 are formed by a plurality of suction pads 30, only one of which is shown. The suction pads 30 engage by vacuum the top surface 14 of smooth synthetic resin of the cover sheet 3. The positioning means 11 are formed in this case by a first and a second comb-shaped member 22 and 23 respectively. The second comb-shaped member 23 protrudes into the first member 22 and can be moved in the direction indicated by the arrow 24 by allowing compressed air to flow through the duct 25 into the hose 26. During this movement the cover sheet 3 is forced into contact with the mould 8. Movement in the reverse direction is brought about by springs 31.

As stated above, the projecting peripheral part 4 of the thermo-hardening synthetic resin cover plate 3 has to be heated in order to render it deformable. In the embodiment shown in figure 6 the cover sheet 3 partly connected with the base sheet 2 is, to this end, positioned on the table 7 and the stop means 11 in a manner such that the peripheral part 4 protrudes out of the stop means 11. With the aid of heating means (not shown), the peripheral part 4 is subsequently brought to the desired temperature. The base sheet 2 with the cover sheet 3 is then moved to the correct place on the table 7 against a stop 34, after which the peripheral part 4 can be aligned to the mould 8 by the stop means 11. Since the filling agent supply device may be a device known per se it is not shown here; only the nozzle 38 thereof is schematically shown.

Figure 7 shows schematically a preferred embodiment of the device 33 according to the invention, in which the mould 8 can be moved by driving means (not shown) from the rest position 36 to the base sheet 2 clamped tight to the table 7 by the holding means 10 and being in contact with the stop 34, said base sheet 2 being provided with the cover sheet 3 made from post-deformable, thermo-hardening synthetic resin, into the operative position 37. This embodiment comprises heating means for the peripheral part 4. After the peripheral part 4 is brought to the desired temperature and is therefore again deformable, said means 27 are moved away in the direction indicated by the arrow 28, next the mould 8 is nestled against the peripheral part 4 and the process is finished. The advantage of this device is that the base sheet 2 with the cover plate 3 partly connected herewith need not be shifted in place with respect to the mould 8 subsequent to heating of the peripheral part 4 so that the risk of damage of the cover plate 3 during the execution of the method is reduced. In this embodiment the stop means 11 are formed by a profile 59 movable with respect to the mould 8 and guided thereby.

According to a preferred method the curable filling agent is pressure fed into the space 12. As shown in figures 8-10 a filling channel 60 is drilled in the base sheet 2 beforehand. When the base sheet 2, with the heated cover sheet 3 is positioned in the mould 8, a closure plate 65 is arranged, closing the space 12. A nozzle 61 of an injection head 62 is connected to the channel 60. The injection head 62 forms a part of an apparatus known as such, for pressure injection of curable two-component material. In this way the space 12 is filled under pressure with the curable filling agent, whereby not only the space is very well filled, but also the peripheral part 4 is nested extra well in the mould 8. Instead of in the base sheet 3, the filling channel 60 can also be arranged in the closure plate 65.

## Claims

1. A method of forming a composite plate (1) having at least one profile convex edge (5) comprising a base sheet (2) and a cover sheet (3), constituted by a sheet of a thermo-hardening synthetic resin of a post-formable type, said cover sheet (3) being connected with the base sheet (2) in the following successive steps:

(a) partly connecting the cover sheet (3) with the base sheet (2) in a manner such that a peripheral part (4) of the cover sheet (3) protrudes beyond the edge (6) of the base sheet (2) in the proximity of which edge (56) the profiled edge (5) has to be formed;

(b) heating the protruding peripheral part (4) of the cover sheet (3);

(c) deforming the heated protruding peripheral part (4) of the cover sheet (3) out of the plane of the already connected part of the cover sheet (3); and

(d) filling out a space (12) bounded by the protruding peripheral part (4) of the cover sheet (3) and the edge (6) of the base sheet (2);

in step (c) the cover sheet (3) being deformed by nestling the peripheral part (4) of the cover sheet (3) with an outer surface against a mould (8) during forced and directed relative movement between the positioning means (11) and the mould (8), said directed movement being substantially in alignment with a wall of the mould, characterized in that in step (c) the nestling is carried out using a wall of a hollow agent filling mold whereby distributed over the length of the peripheral part of the cover sheet a pushing pressure is applied on the free edge of the peripheral part of the cover sheet, that the free edge moves a substantial distance in contact and in alignment with the end wall of the mold and that at least at the end of the deforming step the pushing force is applied substantialy perpendicular to the plane of the free edge and in that in step (d) the space (12) is filled out with a curable filling agent (13) adhering to the two sheets (2, 3), whereafter the filling agent (13) is cured.

2. A method as claimed in Claim 1, characterized in that the cover sheet (3) is not connected with the base sheet (2) over an area next to the edge (6) of the base sheet (2).

3. A method as claimed in Claim 2, characterized in that before the cover sheet is connected with a connecting surface (18) of the base sheet (2), a groove is recessed in the area of the base sheet not to be connected with the cover sheet.

4. A method as claimed in any one of the preceding Claims characterized in that as a base sheet (2) is used a wooden sheet, for example, of plywood or compressed wood fibre.

5. A method as claimed in any one of the preceding Claims characterized in that the outer face of the peripheral part of the cover plate is nestled against a mould (8), the profile of which has the shape of a water-arresting rim.

6. A method as claimed in any one of the preceding Claims characterized in that the curable filling agent is pressure fed into the space (12) between the cover sheet (3) and the base sheet (2) (Fig. 8).

7. A device for forming a composite plate having at least one profiled convex edge by applying the method of any one of the preceding claims, said device comprising :

a connecting device for partly connecting a cover sheet (3) with a base sheet (2) in a manner such that a peripheral part (4) of the cover sheet (3) projects beyond the edge (6) of the base sheet (2), in the proximity of which edge (6) the profiled edge (5) has to be formed ;

a table (7) for carrying the base sheet (2) with cover sheet (3) partly connected thereto ;

holding means connected with the table for retaining the connected sheets (2, 3) on the table (7) ;

heating means for heating the protruding part (4) ; and

deformation means for deforming the heated protruding peripheral part (4) of the cover sheet (3) out of the plane of the already connected part of the cover sheet (3),

a mould (8) connected with the table (7) and having the profile of the profiled edge (5) ;

positioning means (11) for nestling the peripheral part (4) of the cover sheet (3) with an outer surface against the mould (8), said positioning means (11) comprising pressing means for relative movement between the positioning means (11) and the mould (8) and guide means for directing that relative movement substantially in alignment with a wall of the mould (8) ;
characterized by

the mould being a hollow agent filling mould ;

means for applying a pushing force to the free edge of the peripheral part of the cover sheet, the force being distributed over the length of this peripheral part, said means producing movement over a substantial distance of the free edge in contact and in alignment with the end wall of the mould and such that at least at the end of the deforming step the pushing force is applied substantially perpendicularly to the plane of the free edge ; and a filling-agent supply device (38).

8. A device as claimed in Claim 7 characterized in that the holding means (10) are formed by suction pads (30) communicating with an exhaust pump and acting upon the outer face of the cover sheet (3).

9. A device as claimed in Claim 7 or 8 characterized in that the positioning means (11) comprise a first comb-shaped member aligned to a wall of the mould (8) and a second comb-shaped member (23) engaging in and being movable in the plane of the former (Fig. 6).

10. A device as claimed in any one of Claims 7 to 9, characterized in that the mould (8) is movable by driving means with respect to the table (7) between a rest position at a distance from the edge (6) of the base sheet (2) and an operative position in which it is connected with the table (7) (Fig. 7).

**Patentansprüche**

1. Verfharen zum Herstellen einer Verbundplatte (1) mit zumindest einem profilierten konvexen Rand (5), mit einer Grundplatte (2) und einer Deckplatte (3), die durch eine Platte aus temperaturgehärtetem Kunststoff eines nachformbaren Typs gebildet wird, wobei die Deckplatte (3) mit der Grundplatte (2) durch die folgenden aufeinanderfolgenden Schritte verbunden werden :

a) Teilweises Verbinden der Deckplatte (3) mit der Grundplatte (2) auf solche Weise, daß ein periphärer Teil (4) der Deckplatte (3) über die Kante (6) der Grundplatte (2) vorsteht, in deren Nähe der profilierte Rand (5) geformt werden soll ;

b) Erhitzen des vorstehenden periphären Teils (4) der Deckplatte (3) ;

c) Verformen des erhitzten vorstehenden periphären Teils (4) der Deckplatte (3) aus der Ebene des bereits verbundenen Teils der Deckplatte (3) ; und

d) Ausfüllen des Raumes (12), der durch den vorstehenden periphären Teil (4) der Deckplatte (3) und der Kante (6) der Grundplatte (2) begrenzt wird ;
wobei im Schritt c) die Deckplatte (3) verformt wird durch Anschmiegen des periphären Teils (4) der Deckplatte (3) mit einer äußeren Fläche gegen eine Preßform (8) während einer forcierten und gerichteten Relativbewegung zwischen der Positioniervorrichtung (11) und der Preßform (8), wobei die gerichtete Bewegung im wesentlichen mit einer Wand der Preßform ausgerichtet ist, dadurch gekennzeichnet, daß im Schritt c) das Anschmiegen durch Verwenden einer Wand aus einer Füllmittelhohlform ausgeführt wird, wobei verteilt über die Länge des periphären Teils der Deckplatte ein Schubdruck auf den freien Rand des periphären Teils der Deckplatte ausgeübt wird, daß der freie Rand sich eine wesentliche Strecke in Berührung und in Ausrichtung mit der Stirnwand der Form bewegt und daß zumindest am Ende des Verformungsschrittes die Schubkraft im wesentlichen rechtwinklig zu der Ebene des freien Randes ausgeübt wird und dadurch, daß in Schritt d) der Raum (12) mit einem aushärtbaren Füllmittel (13), das an den zwei Platten (2, 3) klebt, ausgefüllt wird, woran anschließend das Füllmittel (13) ausgehärtet wird.

2. Verfharen nach Anspruch 1, dadurch gekennzeichnet, daß die Deckplatte (3) über einen Bereich nahe der Kante (6) der Grundplatte (2) nicht mit der Grundplatte (2) verbunden ist.

3. Verfahren nach Anspruch 2, dadurch gekennzeichnet, daß, bevor die Deckplatte (3) mit der Verbindungsfläche (18) der Grundplatte (2) verbunden wird, in der Fläche der Grundplatte die nicht mit der Deckplatte verbunden werden soll, eine Nut ausgenommen wird.

4. Verfahren nach einem der vorangehenden Ansprüche, dadurch gekennzeichnet, daß als Grundplatte (2) eine Holzplatte, z. B. aus Sperrholz oder Preßspanholz verwendet wird.

5. Verfahren nach einem der vorangehenden Ansprüche, dadurch gekennzeichnet, daß die äußere Fläche des peripheren Teils der Deckplatte in eine Preßform (8) eingeschmiegt wird, deren Profil die Form eines wasserzurückhaltenden Wulstes hat.

6. Verfahren nach einem der vorangehenden Ansprüche, dadurch gekennzeichnet, daß das aushärtbare Füllmittel unter Druck in den Freiraum (12) zwischen der Deckplatte (3) und der Grundplatte (2) eingespeist wird (Fig. 8).

7. Vorrichtung zum Herstellen einer Verbundplatte mit zumindest einem profilierten konvexen Rand durch Verwenden des Verfahrens von einem der vorstehenden Ansprüche umfassend :

Eine Verbindungsvorrichtung zum teilweisen Verbinden einer Deckplatte (3) mit einer Grundplatte (2) in solcher Weise, daß ein peripärer Teil (4) der Deckplatte (3) über die Kante (6) der Grundplatte (2) vorsteht, in deren Nähe der profilierte Rand (5) geformt werden soll ;

einen Tisch (7) zum Tragen der Grundplatte (2) mit der teilweise daran befestigten Deckplatte (3) ;

eine Haltevorrichtung, die mit dem Tisch verbunden ist, zum Festhalten der verbunden Platten (2, 3) auf dem Tisch (7) ;

eine Heizvorrichtung zum Aufheizen des vorstehenden Teils (4) ; und

Deformationsmittel zum Deformieren des erhitzten vorstehenden peripähren Teils (4) der Deckplatte (3) aus der Ebene des bereits verbundenen Teils der Deckplatte (3) ;

eine Preßform (8), die mit dem Tisch (7) verbunden ist und das Profil des profilierten Randes (5) hat ;

eine Positioniervorrichtung (11) zum Einschmiegen der Außenfläche des peripähren Teils (4) der Platte (3) in die Preßform (8), wobei die Positioniervorrichtung (11) Druckelemente zur relativen Bewegung zwischen der Positioniervorrichtung (11) und der Preßform (8) und Führungsmittel zum Leiten der relativen Bewegung im wesentlichen in ausrichtung mit einer Wand der Preßform (8) umfaßt ;

gekennzeichnet durch

die Preßform, die eine Füllmittelhohlform ist ;

Mittel zum Ausüben einer Schubkraft auf den freien Rand des peripähren Teils der Deckplatte, wobei die Kraft über die Länge dieses peripähren Teils verteilt ist, wobei die Mittel eine Bewegung über eine wesentliche Strecke des freien Randes in Berührung und in Ausrichtung mit der Stirnwand der Preßform erzeugen und so, daß zumindest an dem Ende des Verformungsschrittes die Schubkraft im wesentlichen rechtwinklig zu der Ebene des freien Randes ausgeübt wird ; und eine Füllmittelzuführvorrichtung (38).

8. Apparat nach Anspruch 7, dadurch gekennzeichnet, daß die Haltevorrichtung (10) als Saugpolster (30) ausgebildet ist, die mit einer Unterdruckpumpe zusammenwirken und auf die Außenfläche der Deckplatte (3) einwirken.

9. Apparat nach einem der Ansprüche 7 oder 8, dadurch gekennzeichnet, daß die Positioniervorrichtung (11) ein erstes kammförmiges Teil aufweist, das mit einer Wandung der Preßform (8) fluchtet, und ein zweites kammförmiges Teil (23) das in das erstere eingreift und in der Ebene des ersteren bewegbar ist (Fig. 6).

10. Apparat nach einem der Ansprüche 7 bis 9, dadurch gekennzeichnet, daß die Preßform (8) durch Antriebsmittel bewegbar bezüglich des Tisches (7) ist zwischen einer Ruhestellung im Abstand von der Kante (6) der Grundplatte (2) und einer Betriebsstellung, in welcher sie mit dem Tisch (7) verbunden ist. (Fig. 7).

**Revendications**

1. Procédé de formation d'une plaque composite (1) ayant au moins un bord convexe profilé (5), comprenant une feuille de base (2) et une feuille de couverture (3), constituée par une feuille d'une résine synthétique thermodurcissable d'un type qui peut être mis en forme postérieurement, la feuille de couverture (3) étant connectée à la feuille de base (2) au cours des étapes successives suivantes :

(a) le raccordement partiel de la feuille de couverture (3) et de la feuille de base (2) d'une manière telle qu'une partie périphérique (4) de la feuille de couverture (3) dépasse du bord (6) de la feuille de base (2) à proximité duquel (56) le bord profilé (5) doit être formé,

(b) le chauffage de la partie périphérique en saillie (4) de la feuille de couverture (3),

(c) la déformation de la partie périphérique chauffée en saillie (4) de la feuille de couverture (3) hors du plan de la partie déjà raccordée de la feuille de couverture (3), et

(d) le remplissage d'un espace (12) délimité par la partie périphérique en saillie (4) de la feuille de couverture (3) et le bord (6) de la feuille de base (2),

la feuille de couverture (3), dans l'étape (c), étant déformée par emboîtement de la partie périphérique (4) de la feuille de couverture (3) contre une surface externe placée contre un moule (8) pendant le déplacement relatif forcé et dirigé entre le dispositif de positionnement (11) et le moule (8), le mouvement dirigé étant pratiquement dans l'alignement d'une paroi du moule,

caractérisé en ce que, pendant l'étape (c), l'emboîtement est réalisé à l'aide d'une paroi d'un moule creux de remplissage d'agent de manière qu'une pression de poussée répartie sur toute la longueur de la partie périphérique de la feuille de couverture soit appliquée au bord libre de la partie périphérique de la feuille de couverture, en ce que le bord libre se déplace sur une distance notable au contact de la paroi d'extrémité du moule et dans l'alignement de cette paroi, et en ce que, à la fin de l'étape de déformation au moins, la force de poussée est appliquée en direction sensiblement perpendiculaire au plan du bord libre, et en ce que, pendant l'étape (d), l'espace (12) est rempli d'un agent durcissable de remplissage (13) qui adhère aux deux feuilles (2, 3), l'agent de remplissage (13) étant ensuite durci.

2. Procédé selon la revendication 1, caractérisé en ce que la feuille de couverture (3) n'est pas raccordée à la feuille de base (2) dans une zone proche du bord (6) de la feuille de base (2).

3. Procédé selon la revendication 2, caractérisé en ce que, avant raccordement de la feuille de couverture à une surface de raccordement (18) de la feuille de base (2), une gorge est formée en retrait dans la zone de la feuille de base qui ne doit pas être raccordée à la feuille de couverture.

4. Procédé selon l'une quelconque des revendications précédentes, caractérisé en ce que, comme feuille de base (2), une feuille de bois, par exemple de contre-plaqué ou de fibres de bois comprimées, est utilisée.

5. Procédé selon l'une quelconque des revendications précédentes, caractérisé en ce que la face externe de la partie périphérique de la plaque de couverture et emboîtée contre un moule (8) dont le profil a la configuration d'un rebord d'arrêt d'eau.

6. Procédé selon l'une quelconque des revendications précédentes, caractérisé en ce que l'agent durcissable de remplissage est introduit sous pression dans l'espace (18) délimité entre la feuille de couverture (3) et la feuille de base (2) (figure 8).

7. Dispositif de formation d'une plaque composite ayant au moins un bord convexe profilé, par application du procédé selon l'une quelconque des revendications précédentes, le dispositif comprenant :

un dispositif de raccordement destiné à raccorder partiellement une feuille de couverture (3) à une feuille de base (2) de manière qu'une partie périphérique (4) de la feuille de couverture (3) dépasse du bord (6) de la feuille de base (2) à proximité duquel (6) le bord profilé (5) doit être formé,

une table (7) destinée à supporter la feuille de base (2) avec la feuille de couverture (3) qui lui est partiellement connectée,

un dispositif de maintien raccordé à la table et destiné à retenir les feuilles raccordées (2, 3) sur la table (7),

un dispositif de chauffage de la partie en saillie (4), et

un dispositif de déformation de la partie périphérique chauffée en saillie (4) de la feuille de couverture (3) hors du plan de la partie déjà raccordée de la feuille de couverture (3),

un moule (8) raccordé à la table (7) et ayant le profil du bord profilé (5),

un dispositif de positionnement (11) destiné à emboîter la partie périphérique (4) de la feuille de couverture (3) par une surface externe contre le moule (8), le dispositif de positionnement (11) comprenant un dispositif de pression destiné à assurer le déplacement relatif du dispositif de positionnement (11) et du moule (8) et un dispositif de guidage destiné à diriger ce mouvement relatif pratiquement dans l'alignement d'une paroi du mouloe (8),
caractérisé par :

le fait que le moule est un moule creux de remplissage d'agent,

un dispositif destiné à appliquer une force de poussée au bord libre de la partie périphérique de la feuille de couverture, la force étant répartie sur toute la longueur de cette partie périphérique, le dispositif provoquant le mouvement sur une distance notable du bord libre au contact de la paroi d'extrémité du moule et dans l'alignement de cette paroi d'extrémité et de manière que, à la fin de l'étape de déformation au moins, la force de poussée soit appliquée pratiquement en direction perpendiculaire au plan du bord libre, et

un dispositif (38) d'alimentation en agent de remplissage.

8. Dispositif selon la revendication 7, caractérisé en ce que le dispositif de maintien (10) est formé par des patins aspirants (30) communiquant avec une pompe à vide et prenant appui contre la face externe de la feuille de couverture (3).

9. Dispositif selon l'une des revendications 7 et 8, caractérisé en ce que le dispositif de positionnement (11) comporte un premier élément en forme de peigne aligné sur une paroi du moule (8) et un second élément en forme de peigne (23) coopérant avec le premier élément et mobile dans le plan du premier élément (figure 6).

10. Dispositif selon l'une quelconque des revendications 7 à 9, caractérisé en ce que le moule (8) est mobile sous la commande d'un dispositif d'entraînement par rapport à la table (7), entre une position de repos à une certaine distance du bord (6) de la feuille de base (2) et une position de travail dans laquelle il est raccordé à la table (7) (figure 7).

EP 0 028 862 B2

FIG.1

FIG.2

FIG.3

FIG.5

FIG.4

FIG.6

FIG.7

FIG.8

FIG.9

FIG.10